# EUROPÄISCHE PATENTANMELDUNG

(11) **EP 3 590 988 A1**
(43) Veröffentlichungstag der Anmeldung: **08.01.2020**
(21) Anmeldenummer: 18181877.4
(22) Anmeldetag: 05.07.2018
(51) Int. Cl.: C08G 18/72, C08G 18/73, C08G 18/75, C08G 18/79, C08G 18/02, C08G 18/08, C08G 18/28, C08G 18/24, C08G 18/32, C08G 18/42, C09D 175/06, C08G 18/70, C08G 18/48, C08G 18/16, C08G 18/18, C08G 18/20, C09D 175/04, C08G 18/40

(54) **WÄSSRIGE URETDIONGRUPPENHALTIGE ZUSAMMENSETZUNGEN UND VERFAHREN ZU DEREN HERSTELLUNG**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft wässrige uretdiongruppenhaltige Zusammensetzungen, umfassend oder bestehend aus,
(A) mindestens einen uretdiongruppenhaltigen Härter, basierend auf aliphatischen, cycloaliphatischen, araliphatischen und/oder aromatischen Polyisocyanaten, welcher keine chemisch gebundenen hydrophilierenden Gruppen enthält;
(B) mindestens ein Polyacrylatcopolymer;
(C) gegebenenfalls Lösemittel; und
(D) gegebenenfalls Hilfs- und Zusatzstoffe;
wobei das Mengenverhältnis der Komponenten (A) und (B) so bemessen ist, dass das molare Verhältnis von den als Uretdion vorliegenden NCO-Gruppen des Härters (A) zu NCOreaktiven Gruppen des Polyacrylatcopolymers (B) 3 : 0,5 bis 0,5 : 3 beträgt und wobei A und B als physikalische Mischung vorliegen.

Darüber hinaus betrifft die Erfindung ein Verfahren zur Herstellung einer Polyurethanschicht unter Verwenden der wässrigen uretdiongruppenhaltigen Zusammensetzung der vorliegenden Erfindung, die daraus erhaltene Polyurethanschicht und ein Substrat, welches mit dieser Polyurethanschicht beschichtet oder verklebt ist.

## Beschreibung

Die vorliegende Erfindung betrifft wässrige uretdiongruppenhaltige Zusammensetzungen, umfassend oder bestehend aus,
(A) mindestens einen uretdiongruppenhaltigen Härter, basierend auf aliphatischen, cycloaliphatischen, araliphatischen und/oder aromatischen Polyisocyanaten, welcher keine chemisch gebundenen hydrophilierenden Gruppen enthält;
(B) mindestens ein Polyacrylatcopolymer;
(C) gegebenenfalls Lösemittel; und
(D) gegebenenfalls Hilfs- und Zusatzstoffe;
   wobei das Mengenverhältnis der Komponenten (A) und (B) so bemessen ist, dass das molare Verhältnis von den als Uretdion vorliegenden NCO-Gruppen des Härters (A) zu NCOreaktiven Gruppen des Polyacrylatcopolymers (B) 3 : 0,5 bis 0,5 : 3 beträgt und wobei A und B als physikalische Mischung vorliegen.

Darüber hinaus betrifft die Erfindung ein Verfahren zur Herstellung einer Polyurethanschicht unter Verwenden der wässrigen uretdiongruppenhaltigen Zusammensetzung der vorliegenden Erfindung, die daraus erhaltene Polyurethanschicht und ein Substrat, welches mit dieser Polyurethanschicht beschichtet oder verklebt ist.

In den letzten Jahren stieg die Bedeutung wässriger Lacke und Beschichtungsmittel aufgrund immer strengerer Emissionsrichtlinien bezüglich der bei der Lackapplikation freiwerdenden Lösemittel stark an. Obwohl inzwischen bereits für viele Anwendungsbereiche wässrige Lacksysteme zur Verfügung stehen, können diese das hohe Qualitätsniveau konventioneller, lösemittelhaltiger Lacke hinsichtlich Lösemittel- und Chemikalienbeständigkeit oder auch Elastizität und mechanischer Belastung oftmals nicht erreichen. Insbesondere sind bislang noch keine aus wässriger Phase zu verarbeitende Beschichtungsmittel auf Polyurethanbasis bekannt geworden, die den hohen Forderungen aus der Praxis in ausreichendem Maß genügen. Diese Feststellung gilt sowohl für die DE 4001783 A1, die sich mit speziellen anionisch modifizierten aliphatischen Polyisocyanaten befasst, als auch für die Systeme der DE 2456469 A1, der DE 2814815 A1, der EP 0012348 A1 und der EP 0424697 A1, die wässrige, einkomponentige Einbrennlackbindemittel auf Basis von blockierten Polyisocyanaten und organischen Polyhydroxylverbindungen beschreiben.

In den letzten Jahren sind weitere Verbesserungen der einkomponentigen Einbrennlackbindemittel auf Basis von blockierten Polyisocyanaten erzielt worden, wie z.B. in der EP 0576952 A beschrieben.

Die obigen, dem Stand der Technik entsprechenden, einkomponentigen, auf blockierten Polyisocyanaten basierenden, Einbrennlackbindemittel haben den Nachteil, dass, auch wenn die weitgehend lösemittelfrei sind, beim Einbrennen dieser Lackbindemittel die jeweiligen Blockierungsmittel frei gesetzt werden, was wiederum zu Emissionen beiträgt. Daher bestand seit Langem ein Bedarf im Markt, wässrige, emissionsfreie einkomponentige Einbrennlackbindemittel zu entwickeln. Es hat nicht an Versuchen gemangelt, solche Einbrennlackbindemittel auf Basis von Abspalter-freien, Uretdion haltigen Polyisocyanaten herzustellen.

Gemäß der EP 1687354 A1 können wässrige Uretdion haltige Dispersionsbeschichtungen hergestellt werden, indem eine feste Uretdionverbindung mit einem geschmolzenen, wasserdispergierbaren Harz vereinigt wird, das wasserdispergierbare Harz, falls erforderlich, gesalzen wird und die Harzmischung in Wasser dispergiert wird. Das geschmolzene, wasserdispergierbare Harz kann eine Funktionalität aufweisen, die mit der Uretdionverbindung reaktiv ist, oder die Beschichtungszusammensetzung kann ein weiteres wasserdispergierbares Harz mit einer mit der Uretdionverbindung reaktiven Funktionalität enthalten. Im Beispiel wurde allerdings ein Epoxy-Harz verwendet. Es ist allgemein bekannt, dass die Epoxylacke den Polyurethanlacken in meisten Eigenschaften unterlegen sind. Laut der EP 1687354 A1 ist auch erforderlich, dass zur Herstellung dieser Dispersionsbeschichtungen ein zusätzlicher Emulgator eingesetzt wird, was die Lackeigenschaften der Dispersionsbeschichtungen weiter beeinträchtig. Darüber hinaus ist die in der EP 1687354 A1 beschriebene Herstellmethode mit einer sehr hohen thermischen Belastung für die Uretdion-Gruppen verbunden, welche in der Praxis höchst wahrscheinlich zu einem Verlust der Uretdion-Gruppen führen würde. Ferner wurden die in der EP 1687354 A1 beschriebenen Dispersionen direkt nach Herstellung sofort appliziert. Es fehlen in der EP 1687354 A1 jegliche Angaben zur Stabilität dieser Dispersionen.

Die US 2015232609A1 offenbart in Wasser dispergierbare hydrophile Uretdion haltige Polyisocyanate erhältlich durch Umsetzung eines Uretdiongruppen tragenden Präpolymers mit einem eine ionogene Gruppe umfassenden Emulgator, wobei die ionogene Gruppe entweder einen pKa Wert > 8 oder einen pKb > 8 im Wasser bei Raumtemperatur hat. Solche Uretdion haltige Umsetzungsprodukte zeigten eine verbesserte Lagerstabilität von 8 Wochen bei Raumtemperatur, was aber immer noch für praktische Anwendungen in der Industrie, wo nicht selten mit langen Transportwegen gerechnet werden muss, unzureichend ist.

Die vorstehenden Probleme konnten überraschenderweise durch die Verwendung einer physikalischen Mischung des spezifischen Härters und des Polyacrylatcopolymers der vorliegenden Erfindung gelöst werden. Insbesondere konnten Dispersionen erhalten werden, welche eine erhöhte Lagerstabilität im Vergleich zu den im Stand der Technik bekannten Zusammensetzungen aufweisen.

Die vorliegende Erfindung betrifft insbesondere:
1. Wässrige uretdiongruppenhaltige Zusammensetzungen, umfassend oder bestehend aus,
   (A) mindestens einen uretdiongruppenhaltigen Härter, basierend auf aliphatischen, cycloaliphatischen, araliphatischen und/oder aromatischen Polyisocyanaten, bevorzugt basierend auf basierend auf aliphatischen, cycloaliphatischen, und/oder araliphatischen Polyisocyanaten, besonders bevorzugt basierend auf aliphatischen, und/oder cycloaliphatischen Polyisocyanaten, welcher keine chemisch gebundenen hydrophilierenden Gruppen enthält;
   (B) mindestens ein Polyacrylatcopolymer;
   (C) gegebenenfalls Lösemittel; und
   (D) gegebenenfalls Hilfs- und Zusatzstoffe;
      wobei das Mengenverhältnis der Komponenten (A) und (B) so bemessen ist, dass das molare Verhältnis von den als Uretdion vorliegenden NCO-Gruppen des Härters (A) zu NCOreaktiven Gruppen des Polyacrylatcopolymers (B) von 3,0 : 0,5 bis 0,5 : 3,0 bevorzugt von 2,5 : 1,0 bis 1,0 : 2,5; besonders bevorzugt 2,0 : 1,0 bis 1,0 : 2,0 beträgt und wobei (A) und (B) als physikalische Mischung vorliegen.
2. Wässrige uretdiongruppenhaltige Zusammensetzung nach Aspekt 1, dadurch gekennzeichnet, dass
   der mindestens eine uretdiongruppenhaltige Härter (A) durch Umsetzen von monomeren Isocyanaten umfassend oder bestehend aus mindestens einem monomeren Isocyanat ausgewählt aus Tetramethylen-diisocyanat, Cyclohexan-1,3- und 1,4-diisocyanat, Pentamethylendiisocyanat, Hexamethylendiisocyanat (HDI), 1-Isocyanato-3,3,5-trimethyl-5-isocyanatomethylcyclohexan (Isophorondiisocyanat IPDI), Dicyclohexylmethan-2,4'- und/oder 4,4'-diisocyanat, Tetramethylxylylendiisocyanat (TMXDI), Triisocyanatononan, Toluylendiisocyanat (TDI), Diphenylmethan-2,4'-und/oder 4,4'-diisocyanat (MDI), Triphenylmethan-4,4'-diisocyanat oder Naphthylen-1,5-diisocyanat oder Mischungen davon, bevorzugt aus Isophorondiisocyanat, Dicyclohexylmethan-2,4'-und/oder 4,4'-diisocyanat oder Hexamethylendiisocyanat erhalten wurde.
3. Wässrige uretdiongruppenhaltige Zusammensetzung nach Aspekt 1 oder 2, dadurch gekennzeichnet, dass als Einsatzstoffe für den mindestens eine uretdiongruppenhaltigen Härter (A) hydroxylgruppenhaltige Monomere und/oder Polymere eingesetzt werden.
4. Wässrige uretdiongruppenhaltige Zusammensetzung nach einem der vorstehenden Aspekten, dadurch gekennzeichnet, dass der mindestens eine uretdiongruppenhaltige Härter (A) einen freien NCO-Gehalt von weniger als 5 Gew.-% und einen Gehalt an Uretdiongruppen von 1 bis 18 Gew.-% (berechnet als C₂N₂O₂, Molekulargewicht 84 g/mol) aufweist.
5. Wässrige uretdiongruppenhaltige Zusammensetzung nach einem der vorstehenden Aspekten, dadurch gekennzeichnet, dass die wässrige Zusammensetzung eine Säurezahl von 1 bis 100 mg KOH/g, bevorzugt 2 bis 50 mg KOH/g, stärker bevorzugt 5 bis 30 mg KOH/g, bevorzugt gemessen nach DIN EN ISO 2114: 2002-06 mit Aceton und Ethanol im Gewichtsverhältnis 2:1 als Lösungsmittel, und berechnet auf Feststoffgehalt aufweist.
6. Wässrige uretdiongruppenhaltige Zusammensetzung nach einem der vorstehenden Aspekten, dadurch gekennzeichnet, dass das mindestens eine Polyacrylatcopolymer (B) erhalten wird durch Umsetzen einer Mischung aus radikalisch polymerisierbaren Monomeren (M), umfassend oder bestehend aus
   (M1) Hydroxyl- und Carboxyl-freie (Meth)acrylester mit C1 bis C12 Kohlenwasserstoffresten in der Alkoholeinheit;
   (M2) Hydroxyl-funktionelle, radikalisch polymerisierbare Monomere;
   (M3) Carboxyl-funktionelle, radikalisch polymerisierbare Monomere;
   (M4) gegebenenfalls Vinylester von aliphatischen Carbonsäuren;
   (M5) gegebenenfalls mindestens einem cycloaliphatischen Ester von (Meth)acrylsäure und/oder Vinylaromaten.
7. Wässrige uretdiongruppenhaltige Zusammensetzung nach einem der vorstehenden Aspekten, dadurch gekennzeichnet, dass das mindestens eine Hydroxygruppe enthaltende Polyacrylatcopolymer (B) einen OH-Gehalt größer 1 Gew.-% (als OH-Gruppe auf Festgehalt berechnet, Molekulargewicht 17 g / mol) und ein zahlenmittleres Molekulargewicht Mn von 500 bis 20000 g/mol aufweist.
8. Wässrige Uretdiondispersion nach einem der vorstehenden Aspekten, dadurch gekennzeichnet, dass
   das Lösemittel ausgewählt ist aus Aceton, Methylethylketon, Ethylacetat, Butylacetat, Xylol, Schwerbenzol, wie die kommerziell erhältlichen Solvesso 100 oder Solvesso 150, Propylenglykolmono-n-butylether, Dipropylenglykoldimethylether, Methoxypropylacetat, dibasischen Estern oder Mischungen davon.
9. Wässrige Uretdiondispersion nach einem der vorstehenden Aspekten, dadurch gekennzeichnet, dass
   die Hilfs- und Zusatzstoffe ausgewählt sind aus der Gruppe Verlaufsmittel, zum Beispiel Polysilicone oder Acrylate, Lichtschutzmitteln, zum Beispiel sterisch gehinderte Amine, Katalysatoren, zum Beispiel Zinn(II)2-ethylhexanoat oder Dibutylzinndilaurat, Füllstoffen und Pigmenten, wie zum Beispiel Titandioxid, oder Mischungen davon.
10. Wässrige uretdiongruppenhaltige Zusammensetzung nach einem der vorstehenden Aspekten, dadurch gekennzeichnet, dass
   die Summe der Gewichts-Anteile von (A), (B) und (D) 30 bis 60 Gew.-%, bezogen auf den Feststoffgehalt der gesamten wässrigen Zusammensetzung, beträgt.
11. Verfahren zur Herstellung einer Polyurethanschicht, umfassend die Schritte
   i) Bereitstellen einer wässrigen uretdiongruppenhaltige Zusammensetzung gemäß einem der Aspekten 1 bis 10;
   ii) Aufbringen der unter i) erhaltenen Mischung auf ein Substrat;
   iii) Trocknen der Mischung aus Schritt ii), und
   iv) Härten der Mischung aus Schritt iii) unter Wärmezufuhr von 40 °C bis 180 °C für bis zu 180 Minuten.
12. Verfahren nach Aspekt 11, dadurch gekennzeichnet, dass die wässrigen uretdiongruppenhaltige Zusammensetzung durch Vermischen des uretdiongruppenhaltigen Härters (A) mit dem mindestens einen Polyacrylatcopolymer (B) in Abwesenheit von Wasser und anschließender Dispergierung mit Wasser erhalten wurde.
13. Polyurethanschicht, insbesondere Polyurethanfilm, erhältlich durch ein Verfahren nach Aspekt 11 oder 12.
14. Ein Substrat, welches mit der Polyurethanschicht nach Aspekt 13 beschichtet oder verklebt ist.

Falls nicht explizit anders angegeben werden in der vorliegende Erfindung Molekulargewichte mittels GPC (Gelpermeationschromatographie) unter Verwendung von Polystyrolstandards bestimmt. Das durchschnittliche Molekulargewicht ist gemäß dieser Erfindung als das zahlenmittlere Molekulargewicht Mn definiert. Mn wird bei 23 ° C in Tetrahydrofuran als Lösungsmittel bestimmt. Die Messung erfolgt wie in DIN 55672-1: 2007-08 "Gelpermeationschromatographie, Teil 1 - Tetrahydrofuran als Elutionsmittel" mit einem SECURITY GPC-System von PSS Polymer Service, Durchfluss 0,6 ml/min.

Falls nicht explizit anders angegeben beziehen sich in der vorliegenden Erfindung Gew.-% auf das Gesamtgewicht des jeweiligen Systems oder das Gesamtgewicht der jeweiligen Komponente. Zum Beispiel kann ein Copolymer, ein bestimmtes Monomer in Gew.-% angegeben enthalten, in diesem Fall würden sich die Gewichtsprozente auf das Gesamtgewicht des Copolymers beziehen.

Falls nicht explizit anders angegeben bezieht sich der Begriff "mindestens ein" auf die Art der Verbindungen und nicht auf einzelne Moleküle. Zum Beispiel ist mindestens ein Copolymer so zu verstehen, dass mindestens eine Art von Copolymeren enthalten ist, dieses jedoch in einer willkürlichen Anzahl an Molekülen in der Zusammensetzung enthalten ist. Es können also auch zwei oder mehr Arten an Copolymeren in jeweils willkürlicher Anzahl vorhanden sein, falls die Mengen nicht definiert sind.

In einer bevorzugten Ausführungsform ist die wässrige uretdiongruppenhaltige Zusammensetzung im Wesentlichen frei von einem weiteren Co-Emulgator (zusätzlich zu Komponente (B)). Der Begriff "im Wesentlichen frei von" gemäß der vorliegenden Erfindung ist so definiert, dass bevorzugt weniger als 1 Gew.-%, stärker bevorzugt weniger als 0,25 Gew.-%, noch stärker bevorzugt weniger als 0,1 Gew.-%, am stärksten bevorzugt weniger als 0,01 Gew.-% oder gar kein Anteil der jeweiligen Verbindung, jeweils bezogen auf das Gesamtgewicht der wässrigen uretdiongruppenhaltigen Zusammensetzung enthalten sind.

Die wässrige uretdiongruppenhaltige Zusammensetzung der vorliegenden Erfindung ist bevorzugt eine Zusammensetzung auf Polyurethanbasis.

Geeignete, Uretdiongruppen enthaltende Polyisocyanate als Ausgangsverbindungen für die Komponente (A) sind Polyisocyanate, die mindestens eine Isocyanatgruppe und mindestens eine Uretdiongruppe enthalten. Diese werden, wie beispielsweise beschrieben in WO 02/92657 A1 oder WO 2004/005364 A1 durch Reaktion geeigneter Ausgangsisocyanate (a1) hergestellt. Dabei wird unter Katalyse, beispielsweise mit Triazolaten oder 4-Dimethylaminopyridin (DMAP) als Katalysatoren ein Teil der Isocyanatgruppen in Uretdiongruppen überführt. Beispiele für Isocyanate (a1), aus denen die Uretdion-haltigen Bausteine aufgebaut werden sind Tetramethylen-diisocyanat, Cyclohexan-1,3- und 1,4-diisocyanat, Pentamethylendiisocyanat, Hexamethylendiisocyanat (HDI), 1-Isocyanato-3,3,5-trimethyl-5-isocyanatomethylcyclohexan (Isophorondiisocyanat IPDI), Dicyclohexylmethan-2,4'-und/oder 4,4'-diisocyanat, Tetramethylxylylendiisocyanat (TMXDI), Triisocyanatononan, Toluylendiisocyanat (TDI), Diphenylmethan-2,4'-und/oder 4,4'-diisocyanat (MDI), Triphenylmethan-4,4'-diisocyanat oder Naphthylen-1,5-diisocyanat sowie beliebige Gemische derartiger Isocyanate. Bevorzugt sind Isophorondiisocyanat, Dicyclohexylmethan-2,4'-und/oder 4,4'-diisocyanat oder Hexamethylendiisocyanat.

Außer den Isocyanatgruppen und Uretdiongruppen kann die Komponente (A) auch Isocyanurat-, Biuret-, Allophanat-, Urethan- und/oder Harnstoff-Strukturen aufweisen.

Die Umsetzung dieser uretdiongruppentragenden Polyisocyanate zu Uretdiongruppen aufweisenden Härtern (A) beinhaltet die Reaktion der freien NCO-Gruppen der vorstehend genannten Polyisocyanate mit einer Polyolkomponente (b1), gegebenenfalls unter Mitverwendung der Polyolkomponente (b2).

Die Polyolkomponente (b1) weist bevorzugt eine Hydroxylgruppen-Funktionalität von ≥ 2 und ein Molekulargewicht Mₙ von 62 bis 500 g/mol, bevorzugt 62 bis 400 g/mol, besonders bevorzugt 62 bis 300 g/mol auf. Die Polyolkomponente (b1) enthält bevorzugt 2- bis 6-wertige Polyolkomponenten des Molekulargewichts Mn von 62 bis 500 g/mol, bevorzugt 62 bis 400 g/mol, besonders bevorzugt 62 bis 300 g/mol. Bevorzugte Polyolkomponenten (b1) sind beispielsweise 1,4- und/oder 1,3-Butandiol, 1,6-Hexandiol, 2,2,4-Trimethyl-1,3-pentandiol, Trimethylolpropan, Polyester- und/oder Polyetherpolyole des mittleren Molgewichts Mₙ von kleiner oder gleich 500 g/mol.

Geeignete lineare difunktionelle Polyole (b2) sind ausgewählt aus der Gruppe der Polyether, Polyester, Polycaprolactondiole und/oder Polycarbonate. Bevorzugt enthält die PolyolKomponente (b2) mindestens ein Estergruppen enthaltendes Diol des Molekulargewichts Mn von 350 bis 4000 g/mol, bevorzugt von 350 bis 2000 g/mol, besonders bevorzugt von 350 bis 1000 g/mol. Im Allgemeinen handelt es sich bei den Esterdiolen um Gemische, in denen in untergeordneten Mengen auch einzelne Bestandteile vorliegen können, die ein unter- oder oberhalb dieser Grenzen liegendes Molekulargewicht aufweisen. Es handelt sich um die an sich bekannten Polyesterdiole, die aus Diolen und Dicarbonsäuren aufgebaut sind.

Geeignete Diole sind beispielsweise 1,4-Dimethylolcyclohexan, 1,4- oder 1,3-Butandiol, 1,6-Hexandiol, Neopentylglykol, 2,2,4-Trimethyl-1,3-pentandiol, Trimethylolpropan sowie Pentaerythrit bzw. Gemische derartiger Diole. Geeignete Dicarbonsäuren sind beispielsweise aromatische Dicarbonsäuren wie Phthalsäure, Isophthalsäure und Terephthalsäure, cycloaliphatische Dicarbonsäuren wie zum Beispiel Hexahydrophthalsäure, Tetrahydrophthalsäure, Endomethylentetrahydrophthalsäure bzw. deren Anhydride und aliphatische Dicarbonsäuren, die bevorzugt Verwendung finden, wie Bernsteinsäure, Glutarsäure, Adipinsäure, Korksäure, Azelainsäure und Sebacinsäure oder deren Anhydride.

Polyesterdiole auf Basis von Adipinsäure, Phthalsäure, Isophthalsäure und Tetrahydrophthalsäure werden bevorzugt als Komponente (b2) verwendet. Als bevorzugte Diole werden beispielsweise 1,4- oder 1,3-Butandiol, 1,6-Hexandiol oder Trimethylolpropan sowie deren Mischungen eingesetzt.

Ebenfalls bevorzugt als Komponente (b2) sind Polycaprolactondiole des mittleren Molekulargewichts von 350 bis 4000 g/mol, bevorzugt von 350 bis 2000 g/mol, besonders bevorzugt von 350 bis 1000 g/mol, die in an sich bekannter Weise aus einem Diol oder Diolgemisch der oben beispielhaft genannten Art als Starter, und Lactonen wie beispielsweise β-Propiolacton, γ-Butyrolacton, γ- und δ-Valerolacton, ε-Caprolacton, 3,5,5- und 3,3,5-Trimethylcaprolacton oder beliebige Gemische solcher Lactone hergestellt worden sind. Besonders bevorzugt sind solche Polycaprolactondiole, die durch Polymerisation von ε-Caprolacton hergestellt worden sind.

Als lineare Polyolkomponente (b2) können auch (Co)polyether aus Ethylenoxid, Propylenoxid und/oder Tetrahydrofuran eingesetzt werden, die aus weniger als 30 Mol% aus Ethylenoxideinheiten bestehen. Bevorzugt sind Polyether mit einem mittleren Molgewicht Mn von 500 bis 2000 g/mol, wie z.B. Polypropylenoxide oder Polytetrahydrofurandiole.

Geeignet als (b2) sind auch hydroxylgruppenhaltige Polycarbonate, bevorzugt mittleren Molgewichts Mn von 400 bis 4000 g/mol, bevorzugt 400 bis 2000 g/mol wie zum Beispiel Hexandiolpolycarbonat sowie Polyestercarbonate.

Als Polyolkomponente (b2) bei der Herstellung der Uretdiongruppen aufweisenden Härter (A) können auch niedermolekulare Estergruppen aufweisende Diole eines mittleren, aus Funktionalität und Hydroxylzahl berechenbaren Molekulargewichts von 134 bis 349 g/mol, vorzugsweise 176 bis 349 g/mol, zum Einsatz kommen. Hierbei handelt es sich beispielsweise um die an sich bekannten, Estergruppen aufweisenden Diole oder Gemische solcher Diole, wie sie sich z.B. durch Umsetzung von Alkoholen mit unterschüssigen Mengen an Dicarbonsäuren, entsprechenden Dicarbonsäureanhydriden, entsprechenden Dicarbonsäureestern von niederen Alkoholen oder Lactonen herstellen lassen. Beispiele geeigneter Säuren sind Bernsteinsäure, Adipinsäure, Sebacinsäure, Phthalsäure, Isophthalsäure, Phthalsäureanhydrid, Tetrahydrophthalsäure, Maleinsäure, Maleinsäureanhydrid, Terephthalsäuredimethylester und Terephthalsäure-bisglykolester. Geeignete Lactone zur Herstellung dieser Esterdiole sind beispielsweise β-Propiolacton, γ-Butyrolacton, γ- und δ-Valerolacton, ε-Caprolacton, 3,5,5- und 3,3,5-Trimethylcaprolacton oder beliebige Gemische solcher Lactone.

Bei der Herstellung der Uretdiongruppen aufweisenden Härter (A) können auch aminofunktionelle Verbindungen eingesetzt werden. Beispiele für geeignete niedermolekulare aminofunktionelle Verbindungen sind aliphatische und cycloaliphatische Amine und Aminoalkohole mit primär und/oder sekundär gebundenen Aminogruppen, wie z. B. Cyclohexylamin, 2-Methyl-1,5-pentandiamin, Diethanolamin, Monoethanolamin, Propylamin, Butylamin, Dibutylamin, Hexylamin, Monoisopropanolamin, Diisopropanolamin, Ethylendiamin, 1,3-Diaminopropan, 1,4-Diaminobutan, Isophorondiamin, Diethylentriamin, Ethanolamin, Aminoethyl-ethanolamin, Diaminocyclohexan, Hexamethylendiamin, Methyliminobispropylamin, Iminobispropylamin, Bis(aminopropyl)piperazin, Aminoethylpiperazin, 1,2-Diaminocyclohexan, Triethylentetramin, Tetraethylenpentamin, Bis(4-amino-cyclohexyl)methan, Bis(4-amino-3-methylcyclohexyl)methan, Bis(4-amino-3,5-dimethylcyclohexyl)methan, Bis(4-amino-2,3,5-trimethylcyclohexyl)methan, 1,1-Bis(4-aminocyclohexyl)propan, 2,2-Bis(4-aminocyclohexyl)propan, 1,1-Bis(4-aminocyclohexyl)ethan, 1,1-Bis(4-aminocyclohexyl)butan, 2,2-Bis(4-aminocyclohexyl)butan, 1,1-Bis(4-amino-3-methylcyclohexyl)ethan, 2,2-Bis(4-amino-3-methylcyclohexyl)propan, 1,1-Bis(4-amino-3,5-dimethylcyclohexyl)ethan, 2,2-Bis(4-amino-3,5-dimethylcyclohexyl)propan, 2,2-Bis(4-amino-3,5-dimethylcyclohexyl)butan, 2,4-Diaminodicyclohexylmethan, 4-Aminocyclohexyl-4-amino-3-methylcyclohexylmethan, 4-Amino-3,5-dimethylcyclohexyl-4-amino-3-methylcyclohexylmethan und 2-(4-Aminocyclohexyl)-2-(4-amino-3-methylcyclohexyl)methan.

Bei der Herstellung der Uretdiongruppen aufweisenden Härter (A) können ggf. Lösemittel verwendet werden. Als Lösemittel für die Uretdiongruppen aufweisenden Härter (A) kommen alle flüssigen Substanzen in Frage, die nicht mit anderen Inhaltstoffen reagieren, z. B. Aceton, Methylethylketon, Ethylacetat, Butylacetat, Xylol, Schwerbenzol, wie die kommerziell erhältlichen Solvesso 100 und Solvesso 150, Propylenglykolmono-n-butylether, Dipropylenglykoldimethylether, Methoxypropylacetat, dibasische Ester oder Mischungen davon.

Die Uretdiongruppen aufweisenden Härter (A) sind im Wesentlichen frei von ionischen oder nicht ionischen, chemisch gebundenen hydrophilierenden Gruppen. Unter den ionischen hydrophilierenden Gruppen versteht der Fachmann Gruppen, die eine Fähigkeit zur Anionen- oder Kationenbildung aufweisen. Zur Anionen- oder Kationenbildung befähigte Gruppen sind diejenigen, die durch chemische Reaktion in eine anionische bzw. kationische Gruppe umgewandelt werden können, insbesondere durch Neutralisation.

Die Uretdiongruppen aufweisenden Härter (A) sind bevorzugt frei von zu Anionenbildung befähigten, Carboxylgruppen haltigen Polyolen oder Diolen wie z.B. Dihydroxycarbonsäuren, wie α,α-Dialkylolalkansäuren, insbesondere α,α-Dimethylolalkansäuren, wie 2,2-Dimethylolessigsäure, 2,2-Dimethylolpropionsäure, 2,2-Dimethylolbuttersäure, 2,2-Dimethylolpentansäure, Dihydroxybernsteinsäure, oder Polyhydroxysäuren, wie Glukonsäure. Weiterhin sind die Uretdiongruppen aufweisenden Härter (A) bevorzugt frei von zu Anion-Bildung befähigten, aminogruppenhaltigen Verbindungen wie beispielsweise α,Ω-Diaminovaleriansäure oder 2,4-Diamino-toluol-sulfonsäure. Die Uretdiongruppen aufweisenden Härter (A) sind ebenfalls bevorzugt frei von zu Anionenbildung befähigten, Sulfonsäuregruppen.

Darüber hinaus sind die Uretdiongruppen aufweisenden Härter (A) bevorzugt frei von zu Kationenbildung befähigten Verbindungen aus der Gruppe der tertiäre Amino- oder Ammoniumverbindungen, wie z.B. Tris(hydroxyalkyl)amine, N,N'-Bis(hydroxyalkyl)alkylamine, N-Hydroxyalkyldialkylamine, Trisaminoalkylamine, N,N'- Bisaminoalkylalkylamine, N-Aminoalkyldialkylamine, sowie Mischungen davon.

Die Uretdiongruppen aufweisenden Härter (A) sind ferner bevorzugt frei von nichtionisch hydrophilisierenden Verbindungen, wie zum Beispiel Polyalkylenoxidpolyetheralkoholen oder Polyalkylenoxidpolyetheraminen. Insbesondere sind die Uretdiongruppen aufweisenden Härter (A) bevorzugt frei von Polyethylenoxidpolyethern oder gemischten Polyalkylenoxidpolyethern, deren Alkylenoxideinheiten zu mindestens 30 Mol-% aus Ethylenoxideinheiten bestehen.

Bevorzugte Uretdiongruppen aufweisende Härter (A) haben einen freien NCO-Gehalt von weniger als 5 Gew.- % und einen Gehalt an Uretdiongruppen von 1 bis 18 Gew.- % (berechnet als C₂N₂O₂, Molekulargewicht 84 g/mol). Außer den Uretdiongruppen können die Härter (A) auch Isocyanurat-, Biuret-, Allophanat-, Urethan- und/oder Harnstoff-Strukturen aufweisen.

Die Zusammensetzung enthält ebenfalls mindestens ein Polyacrylatcopolymer (Komponente (B)). Gemäß der vorliegenden Erfindung umfasst der Begriff "Polyacrylatcopolymer" sowohl Polyacrylatcopolymere als auch Poly(meth)acrylatcopolymere.

Geeignete Polyacrylatcopolymere können zum Beispiel durch die Synthese der folgenden Mischung von radikalisch polymerisierbaren Monomeren (M) erhalten werden:
(M1) Hydroxyl- und Carboxyl-freie (Meth)acrylester mit C1 bis C12 Kohlenwasserstoffresten in der Alkoholeinheit;
(M2) Hydroxyl-funktionelle, radikalisch polymerisierbare Monomere;
(M3) Carboxyl-funktionelle, radikalisch polymerisierbare Monomere;
(M4) gegebenenfalls Vinylester von aliphatischen Carbonsäuren;
(M5) gegebenenfalls mindestens einem cycloaliphatischen Ester von (Meth)acrylsäure und/oder Vinylaromaten.

Die Mischung kann ferner gegebenenfalls Polyole (PO) ausgewählt aus der Gruppe der Polyesterpolyole und / oder Polycarbonatpolyole enthalten, wobei die Polyole eine mittlere Hydroxylgruppenfunktionalität von mindestens 2 aufweisen.

Die erfindungsgemäßen Polyacrylatdispersionen können hohe Hydroxylgruppengehalte aufweisen, so dass, ohne an eine Theorie gebunden zu sein, ein höherer Vernetzungsgrad und damit höhere Härte der Beschichtungen erreicht werden kann.

Im Rahmen der vorliegenden Erfindung werden Acrylsäure oder Methacrylsäure auch als (Meth)acrylsäure bezeichnet.

Als Hydroxyl- und Carboxylgruppen freie Monomere (M1) werden Acrylate und Methacrylate mit 1 bis 18 Kohlenstoffatomen im Alkoholteil der Estergruppe eingesetzt. Die Alkoholeinheit ist vorzugsweise aliphatisch und kann linear oder verzweigt sein.

Beispiele für geeignete Monomere der Komponente (M1) sind Methyl-, Ethyl-, n-Propyl-, Isopropyl-, n-Butyl-, Isobutyl-, tert.-Butyl-, die isomeren Pentyl-, Hexyl-, 2-Ethylhexyl-, Octyl- und Dodecyl (meth) acrylate. Bevorzugte Monomere (M1) sind Methyl, n-Butyl, Isobutyl, tert.-Butyl (meth) acrylat sowie 2-Ethylhexylacrylat und Styrol.

Geeignete hydroxyfunktionelle Monomere (M2) sind ethylenisch ungesättigte, hydroxylgruppenhaltige Monomere wie Hydroxyalkylester ungesättigter Carbonsäuren, vorzugsweise Hydroxyalkyl(meth)acrylate mit 2 bis 12, vorzugsweise 2 bis 6 Kohlenstoffatomen im Hydroxyalkylrest. Beispiele für besonders bevorzugte Verbindungen sind 2-Hydroxyethyl(meth)acrylat, die isomeren Hydroxypropyl(meth)acrylate, 2-, 3- und 4-Hydroxybutyl(meth)acrylate und die isomeren Hydroxyhexyl(meth)acrylate. Bevorzugt sind 4-Hydroxybutylacrylat (Butandiolmonoacrylat) und Hydroxyethylmethacrylat.

Geeignete carboxylfunktionelle radikalisch polymerisierbare Monomere (M3) sind olefinisch ungesättigte Monomere, die Carbonsäure- oder Carbonsäureanhydridgruppen enthalten, wie Acrylsäure, Methacrylsäure, beta-Carboxyethylacrylat, Crotonsäure, Fumarsäure, Maleinsäureanhydrid, Itaconsäure- oder Monoalkylester von zweibasigen Säuren oder Anhydriden, wie beispielsweise Maleinsäuremonoalkylester. Acrylsäure und/oder Methacrylsäure sind bevorzugt.

Geeignete Vinylester von aliphatischen Carbonsäuren (M4) können enthalten sein. Beispiele für diese Monomere sind die Veresterungsprodukte von Vinylalkohol mit linearen oder verzweigten, aliphatischen Carbonsäuren wie beispielsweise Vinylacetat, Vinylpropionat, Vinylbutyrat, Vinyl-2-ethylhexanoat, Vinyloctanoat, Vinyldecanoat, Vinylneodecanoat, Vinyldodecanoat (Vinyllaurat) oder Vinylstearat.

Geeignete Monomere (M5) sind beispielsweise Cyclohexyl(meth)acrylat, mit Alkylgruppen kernsubstituierte Cyclohexyl(meth)acrylate, 4-tert.-Butylcyclohexyl(meth)acrylat, Norbornyl(meth)acrylat, Isobornyl(meth)acrylat, Isobornylacrylat und/oder Isobornylmethacrylat und besonders bevorzugt Isobornylmethacrylat bevorzugt. Es ist auch möglich, Mischungen zu verwenden, die Isobornylacrylat und Isobornylmethacrylat und andere Monomere (M5) umfassen. Besonders geeignete Vinylaromaten sind Styrol, gegebenenfalls substituierte Styrole und Vinyltoluole. Die von Isobornylacrylat und Isobornylmethacrylat verschiedenen Monomere (M5) können gegebenenfalls in Mengen von weniger als 10 Gew.-%, bezogen auf das Gesamtgewicht von (M1) bis (M5), eingesetzt werden.

Gegebenenfalls können auch weitere Monomere (M6) wie Acetoacetoxyethylmethacrylat, Acrylamid, Acrylnitril, Vinylether, Methacrylnitril oder Vinylacetate enthalten sein. Daneben können anteilig monofunktionelle Polyalkylenoxide mit Molekulargewichten von 200 bis 3000 g/mol, vorzugsweise 350 bis 1000 g/mol, oder veresterte (Meth)acrylsäure, die sich als nichtionische, hydrophile Gruppen eignen, eingesetzt werden. Geeignete Alkylenoxide umfassen vorzugsweise Ethylenoxid oder Mischungen von Ethylenoxid und Propylenoxid. Vorzugsweise erfolgt die Hydrophilierung der Copolymeren jedoch durch ionische Gruppen, also Monomere (M3).

Die Anteile der Monomere (M1) bis (M6) können so gewählt werden, dass das Polyacrylatcopolymer eine OH-Zahl (DIN EN ISO 4629-1:2016-12) von 50 bis 400 mg KOH/g, bevorzugt von 100 bis 300 mg KOH/g Feststoffe aufweist. In Bezug auf die Polyesterpolyole und/oder Polycarbonatpolyole (PO) ist es bevorzugt, dass die durchschnittliche Hydroxylgruppenfunktionalität mindestens 2,5 beträgt. Geeignete Polyesterpolyole sind die bekannten Polykondensate aus Poly (tri, tetra)olen und Di- sowie gegebenenfalls Poly (Tri, Tetra) - Carbonsäuren oder Hydroxycarbonsäuren oder Lactonen.

Anstelle der freien Polycarbonsäuren können auch die entsprechenden Polycarbonsäureanhydride oder entsprechende Polycarbonsäureester niederer Alkohole zur Herstellung der Polyester eingesetzt werden. Beispiele für geeignete Alkohole sind Trimethylolpropan, Glycerin, Erythrit, Pentaerythrit, Trimethylolbenzol oder Trishydroxyethylisocyanurat.

Beispiele für geeignete Dicarbonsäuren umfassen Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäuren, Itaconsäure Säure, Malonsäure, Suberinsäure, 2-Methylbernsteinsäure, 3,3-Diethylgiutarsäure und 2,2-Dimethylbernsteinsäure. Die möglichen Anhydride dieser Säuren sind ebenfalls geeignet. Im Sinne der vorliegenden Erfindung sind folglich die Anhydride durch den Ausdruck "Säure" umfasst. Es ist auch möglich, Monocarbonsäuren, wie Benzoesäure, Hexancarbonsäure oder Fettsäuren, zu verwenden, vorausgesetzt, dass die durchschnittliche Funktionalität des Polyols größer als 2 ist. Gesättigte aliphatische oder aromatische Säuren sind bevorzugt, wie Adipinsäure oder Isophthalsäure. In kleineren Mengen können Polycarbonsäuren wie Trimellithsäure verwendet werden. Beispiele für Hydroxycarbonsäuren, die als Reaktanten bei der Herstellung eines Polyesterpolyols mit einer endständigen Hydroxylgruppe verwendet werden können, umfassen Hydroxycapronsäure, Hydroxybuttersäure, Hydroxydecansäure oder Hydroxystearinsäure. Beispiele für geeignete Lactone umfassen ε-Caprolacton oder Butyrolacton.

Die geeigneten hydroxylgruppenhaltigen Polycarbonate sind erhältlich durch Umsetzung von Kohlensäurederivaten, z.B. Diphenylcarbonat, Dimethylcarbonat oder Phosgen mit Polyolen. Beispiele umfassen Ethylenglycol, 1,2- und 1,3-Propandiol, 1,3- und 1,4-Butandiol, 1,6-Hexandiol, 1,8-Octandiol, Neopentylglycol, 1,4-Bishydroxymethylcyclohexan, 2- Methyl-1,3-propandiol, 2,2,4-Trimethylpentan-1,3-diol, Dipropylenglykol, Polypropylenglykole, Dibutylenglykol, Polybutylenglykole, Bisphenol A, Tetrabrombisphenol A, aber auch Lacton-modifizierte Diole. Die Diolkomponente enthält vorzugsweise 40 bis 100 Gew.-% Hexandiol, vorzugsweise 1,6-Hexandiol und/oder Hexandiolderivate, besonders bevorzugt solche, die neben endständigen OH-Gruppen Ether- oder Estergruppen enthalten. Um die gewünschte Funktionalität von mindestens 2 zu erhalten, umfassen die Polycarbonatpolyole Verzweigungen durch den Einbau von polyfunktionellen Komponenten, insbesondere niedermolekularen Polyolen.

Beispiele für Verbindungen, die für diesen Zweck geeignet sind, umfassen Glycerin, Trimethylolpropan, Hexan-1,2,6-triol, Butan-1,2,4-triol, Trimethylolpropan, Pentaerythritol, Chinitol, Marinitol und Sorbitol, Methylglycosid oder 1,3,4,6-Dianhydrohexitole. Die Herstellung des Polyacrylatcopolymers kann prinzipiell mittels konventioneller radikalischer Polymerisationsverfahren in organischer Phase erfolgen. Das Polyacrylatcopolymer wird vorzugsweise in einem mehrstufigen Verfahren hergestellt, wie es bereits in EP-A 0 947 557 oder in der EP-A 1 024 184 beschrieben ist. Bei diesem Verfahren wird zuerst eine hydrophobe Monomermischung, die frei von Säuregruppen oder mit einem niedrigen Säuregruppengehalt ist, zudosiert und dann zu einem späteren Zeitpunkt in der Polymerisation eine hydrophilere Monomermischung, Säuregruppen enthaltend, zudosiert, wobei die hydrophilere Monomermischung Säuregruppen enthält, die keine Monomere vom Typ (M4) und (M5) enthalten. Die Copolymerisation wird im Allgemeinen bei 40 bis 180°C, vorzugsweise bei 80 bis 160°C durchgeführt. Geeignete Initiatoren (I) für die Polymerisationsreaktion schließen organische Peroxide, wie beispielsweise Di-tert-butylperoxid, oder tert-Butylperoxy-2-ethylhexanoat und Azoverbindungen ein.

Die verwendeten Initiatormengen hängen von dem gewünschten Molekulargewicht ab. Aus Gründen der Betriebssicherheit und der leichteren Handhabung können auch Peroxidinitiatoren in Form einer Lösung in geeigneten organischen Lösungsmitteln der bereits angegebenen Art eingesetzt werden. Die Geschwindigkeit der Zugabe des Initiators (I) in dem Verfahren der Erfindung kann so gesteuert werden, dass sie bis zum Ende der Monomerbeschickung andauert, und die Lösungsmittelmengen in den Schritten eins und zwei werden so gewählt, dass ein organischer Lösungsmittelgehalt von weniger als 20 Gew .-% resultiert.

Die Mengen der Bestandteile werden vorzugsweise so berechnet, dass sich ein Massenverhältnis von (M1) : (M2) von 9 : 1 bis 6: 1 ergibt, insbesondere bevorzugt ein Massenverhältnis von (M1) : (M2) von 4: 1 bis 3: 1. Ebenfalls bevorzugt ist (M1) : (M3) von 50: 1 bis 40: 1, insbesondere bevorzugt ist (M1) : (M3) von 35: 1 bis 30: 1. Ebenfalls bevorzugt ist (M1) : (M5) von 9: 1 bis 6: 1, insbesondere bevorzugt ist (M1) :(M5) von 6: 1 bis 5: 1.

Die radikalische Polymerisation kann in Gegenwart eines Lösungsmittels oder Lösungsmittel/Wasser-Gemisches durchgeführt werden, dass in das Reaktionsgefäß gefüllt wird. Als organische Lösungsmittel kommen alle in der Lacktechnologie bekannten Lösungsmittel in Betracht, wobei solche bevorzugt sind, die üblicherweise als Cosolventien in wässrigen Dispersionen eingesetzt werden, wie beispielsweise Alkohole, Ether, Ethergruppen enthaltende Ether, Ester, Ketone oder unpolare Kohlenwasserstoffe oder Mischungen dieser Lösungsmittel. Die Lösungsmittel werden in solchen Mengen verwendet, dass ihr Anteil in der fertigen Dispersion 0 bis 20 Gew.-%, vorzugsweise 0,1 bis 15 Gew.-% beträgt.

Es ist weiterhin möglich, das Polyacrylatcopolymer nach dem Verfahren der EP-A 1 024 184 herzustellen, wobei man als Vorlage ein hydrophobes Copolymer verwendet. Anstelle eines mehrstufigen Polymerisationsverfahrens ist es ebenfalls möglich, das erfindungsgemäße Verfahren kontinuierlich durchzuführen (Gradientenpolymerisation), d.h. es wird eine Monomermischung mit einer sich ändernden Zusammensetzung zugegeben, wobei die hydrophilen (säurefunktionellen) Monomerfraktionen am Ende des Feeds höher sind als am Anfang. Das zahlenmittlere Molekulargewicht Mn der Polyacrylatcopolymere kann durch eine gezielte Wahl der Betriebsparameter, beispielsweise des molaren Monomer/Initiator-Verhältnisses, beispielsweise der Reaktionszeit oder der Temperatur, eingestellt werden im allgemeinen zwischen 500 g/mol und 30.000 g/mol, bevorzugt zwischen 1.000 g/mol und 15.000 g/mol, besonders bevorzugt zwischen 1.500 g/mol und 10.000 g/mol. Der Hydroxylgruppengehalt der Polyacrylatcopolymere in 100% - Form beträgt vorzugsweise 1,5 bis 12,0 Gew.-%, bevorzugt 2,0 bis 10,0 Gew .-% und besonders bevorzugt 1,5 bis 9,0 Gew .-%.

Vor, während oder nach dem Vermischen der Polyacrylatcopolymere mit dem mindestens einen uretdiongruppenhaltigen Härter (A) werden die vorhandenen Säuregruppen der Polyacrylatcopolymere vorzugsweise durch Zugabe geeigneter Neutralisationsmittel zumindest anteilig in ihre Salzform überführt. Geeignete Neutralisationsmittel sind organische Amine oder wasserlösliche anorganische Basen, wie beispielsweise lösliche Metallhydroxide, Metallcarbonate oder Metallhydrogencarbonate, wie beispielsweise Natriumhydroxid oder Kaliumhydroxid.

Beispiele für geeignete Amine sind Butyldiethanolamin, N-Methylmorpholin, Triethylamin, Ethyldiisopropylamin, N,N-Dimethylethanolamin, N,N-Dimethylisopropanolamin, N-Methyldiethanolamin, Diethylethanolamin, Triethanolamin, Butanolamin, Morpholin, 2-Aminomethyl-2-methylpropanol oder Isophorondiamin. In Gemischen ist es auch möglich, anteilig Ammoniak zu verwenden. Besonders bevorzugt sind Triethanolamin, N,N-Dimethylethanolamin und Ethyldiisopropylamin.

In einer Ausführungsform enthält das Gemisch aus radikalisch polymerisierbaren Monomeren (M) nicht: (M4) Vinylester von aliphatischen Carbonsäuren. Beispiele für diese zu vermeidenden Monomere sind die Veresterungsprodukte von Vinylalkohol mit linearen oder verzweigten, aliphatischen Carbonsäuren wie beispielsweise Vinylacetat, Vinylpropionat, Vinylbutyrat, Vinyl-2-ethylhexanoat, Vinyloctanoat, Vinyldecanoat, Vinylneodecanoat, Vinyldodecanoat (Vinyllaurat) oder Vinylstearat.

In einer weiteren Ausführungsform enthält das Gemisch aus radikalisch polymerisierbaren Monomeren (M) nicht: (M5): cycloaliphatische Ester von (Meth)acrylsäure und/oder Vinylaromaten. Beispiele für diese zu vermeidenden Monomere sind Cyclohexyl(meth)acrylat, mit Alkylgruppen kernsubstituierte Cyclohexyl(meth)acrylate, 4-tert.-Butylcyclohexyl(meth)acrylat, Norbornyl(meth)acrylat, Isobornyl(meth)acrylat, Isobornylacrylat und/oder Isobornylmethacrylat und/oder Mischungen der vorstehenden Monomere.

In einer anderen Ausführungsform weist das Polyacrylatcopolymer in 100% -Form einen Hydroxylgruppengehalt von > 1,5 Gew.-% bis <12,0 Gew.-%, vorzugsweise von > 2,0 Gew.-% bis <10,0 Gew.-% auf. Der Hydroxylgruppengehalt kann berechnet werden, indem man die Hydroxylzahl, wie vorstehend beschrieben bestimmt, durch 33 dividiert.

In einer weiteren Ausführungsform weisen die Polyole (PO) einen Hydroxylgruppengehalt von > 15 Gew.-% bis < 35 Gew.-%, bevorzugt von > 20 Gew.-% bis < 30 Gew.-%, auf. Der Hydroxylgruppengehalt kann berechnet werden, indem man die Hydroxylzahl, wie vorstehend beschrieben bestimmt, durch 33 dividiert.

In einer weiteren Ausführungsform sind die Polyole (PO) Polyesterpolyole, die aus der Umsetzung eines mindestens trifunktionellen Alkohols mit einem Lacton erhalten werden. Ein besonders bevorzugtes Polyol wird aus Trimethylolpropan und ε-Caprolacton erhalten. Beispielsweise können Trimethylolpropan und ε-Caprolacton in einem Gewichtsverhältnis von > 60 : 40 bis < 80 : 20, bevorzugt > 68 : 32 bis < 72 : 28 umgesetzt werden. Gegebenenfalls kann die Reaktion in Gegenwart eines Katalysators stattfinden.

In einer weiteren Ausführungsform werden die Monomere (M1), (M2), (M3), (M4) und (M5) in folgenden Mengen eingesetzt:
(M1) > 25 Gew.-% bis < 90 Gew.-% ,vorzugsweise> 30 Gew.-% bis < 80 Gew.-%,
(M2) > 8 Gew.-% bis < 50 Gew.-%, vorzugsweise > 30 Gew.-% bis < 45 Gew.-%,
(M3) > 1 Gew.-% bis < 10 Gew.-%, vorzugsweise > 2 Gew.-% bis < 5 Gew.-%,
gegebenenfalls (M4) > 1 Gew.-% bis < 10 Gew.-%, vorzugsweise > 1,5 Gew .-% bis < 5 Gew.-%, gegebenenfalls (M5) > 5 Gew.-% bis < 40 Gew.-%, vorzugsweise > 10 Gew.-% bis < 35 Gew.-%; und gegebenenfalls die Polyole (PO) in Mengen von> 5 Gew.-% bis < 20 Gew.-%, vorzugsweise > 8 Gew.-% bis < 15 Gew.-%, bezogen auf das Gesamtgewicht der Feststoffe in der Dispersion, die angegebenen Mengen summieren sich auf 100 Gew.-%.

Die Herstellung des erfindungsgemäß eingesetzten Polyurethanharzes erfolgt bevorzugt in der Weise, dass man ein Polyacrylatcopolymer (B) mit mindestens einem uretdiongruppenhaltigen Härter (A), basierend auf aliphatischen, (cyclo)aliphatischen, araliphatischen und/oder aromatischen Polyisocyanaten, welcher keine chemisch gebundene hydrophilisierende Gruppen enthält, in nicht-wässrigem System homogen vermischt. Anschließend werden die im Polyacrylatcopolymer (B) vorhandenen Carboxylgruppen bevorzugt zu mindestens 50 %, stärker bevorzugt 80 % bis 130 %, besonders bevorzugt 95 bis 125 % mit geeigneten Neutralisationsmitteln neutralisiert und anschließend mit entionisiertem Wasser dispergiert. Die Neutralisation kann vor, während oder nach dem Dispergierschritt erfolgen. Bevorzugt ist jedoch die Neutralisation vor der Wasserzugabe.

Geeignete Neutralisationsmittel sind beispielsweise Triethylamin, Dimethylaminoethanol, Dimethylcyclohexylamin, Triethanolamin, Methyldiethanolamin, Diisopropanolamin, Ethyldiisopropylamin, Diisopropylcyclohexylamin, N-Methylmorpholin, 2-Amino-2-methyl-1-propanol, Ammoniak oder andere gebräuchliche Neutralisationsmittel oder deren Neutralisationsgemische.

Bevorzugt sind tert. Amine wie z.B. Triethylamin, Triethanolamin, Diisopropylhexylamin, und Dimethylethanolamin, besonders bevorzugt sind Triethanolamin und Dimethylethanolamin.

Gemäß der vorliegenden Erfindung sind die Neutralisationsmittel unter die Gruppe der Hilfs- uns Zusatzstoffen (D) zu rechnen.

Als Lösemittel unter (C) sind alle flüssigen Substanzen geeignet, die nicht mit anderen Inhaltstoffen reagieren. Bevorzugt sind Aceton, Methylethylketon, Ethylacetat, Butylacetat, Xylol, Schwerbenzol, wie die kommerziell erhältlichen Solvesso 100 und Solvesso 150, Propylenglykolmono-n-butylether, Dipropylenglykoldimethylether, Methoxypropylacetat, dibasischen Estern oder Mischungen davon. Gegebenenfalls kann das eingesetzte Lösemittel anschließend destillativ entfernt werden.

Erfindungsgemäß können die in der Lack- bzw. Klebstofftechnologie üblichen Zusatzstoffe (D), wie Verlaufsmittel, z. B. Polysilicone oder Acrylate, Lichtschutzmittel, z. B. sterisch gehinderte Amine, Katalysatoren, zum Beispiel Zinn(II)2-ethylhexyloctoat oder Dibutylzinndilaurat oder andere Hilfsmittel, wie sie z. B. in EP 0 669 353 beschrieben wurden, in einer Gesamtmenge von bevorzugt 0,05 bis 5 Gew.-% enthalten sein. Füllstoffe und Pigmente wie zum Beispiel Titandioxid können in einer Menge bis zu 50 Gew.-% der wässrigen Zusammensetzung zugesetzt werden.

### Beispiele:

### Eingesetzte Rohstoffe:

Dowanol PnB: Propylenglykol Mono-n-Butylether von der Fa. Dow
Peroxan DB: Di-tert-butylperoxid von der Fa. Pergan.
Solvent Naphtha 100: ein aromatisches Lösemittel, CAS: 64 742-95-6, von der Fa. Azelis.
Veova 9: Versaticsäure Vinylester von der Fa. Momentive.

### Verwendete analytische Methoden:

Sämtliche Viskositätsmessungen erfolgten mit einem Physica MCR 51 Rheometer der Fa. Anton Paar Germany GmbH (DE) nach DIN EN ISO 3219:1994-10.

Die Bestimmung der NCO-Gehalte erfolgte titrimetrisch nach DIN EN ISO 11909:2007-05.

Die Bestimmung der OH-Zahlen erfolgte titrimetrisch nach DIN EN ISO 4629-2:2015-02.

Die Bestimmung der Säurezahlen titrimetrisch nach DIN EN ISO 2114:2002-06.

Festgehalt - Bestimmung erfolgte mittels Umluftofen nach DIN EN ISO 3251:2008-06, Verfahren B.

Die Bestimmung der mittleren Teilchengröße (MTG) erfolgte mit einem Zetasizer Nano der Fa. Malvern (DE) nach DIN ISO 13321:2004-10.

Die pH-Wert Bestimmung erfolgte mit einem pH-Meter nach DIN ISO 976:2008-07 in Verdünnung 1:4 mit destillierten Wasser.

Die Rest-Monomeren Gehalte wurden nach DIN EN ISO 10283 gaschromatographisch mit internem Standard gemessen.

Die Messung der Pendelhärte erfolgte auf einer normierten Coil-Prüftafel (Coil Coating schwarz - CS 200570, Fa. Heinz Zanders Prüf-Blech-Logistik) nach DIN EN ISO 1522:2007-04 mit einem König Pendel.

Die Bestimmung der Chemikalienbeständigkeit erfolgte auf einer normierten Coil-Prüftafel (Coil Coating schwarz - CS 200570, Fa. Heinz Zanders Prüf-Blech-Logistik). Ein mit der Prüfsubstanz (Xylol bzw. Wasser) getränkter Wattebausch wurde auf die Lackoberfläche gelegt und mit einem Uhrglas abgedeckt. Nach der angegebenen Belastungszeit wurde die mit Prüfsubstanz getränkte Watte entfernt, die belastete Stelle abgetrocknet und sofort abgemustert. Beurteilt wurden Erweichung bzw. Verfärbung der Lackoberfläche. Die Beurteilung wurde in Anlehnung DIN EN ISO 4628-1 wie folgt vorgenommen:
0 keine, d. h. keine erkennbaren Schäden
1 sehr wenige, d. h. kleine, gerade noch signifikante Anzahl von Schäden
2 wenige, d. h. kleine, aber signifikante Anzahl von Schäden
3 mäßig viele Schäden
4 Schäden in beträchtlicher Anzahl
5 sehr viele Schäden
Wenn nicht explizit anders beschrieben, beziehen sich alle % Angaben auf Gewichtsprozente.

### Herstellung eines Uretdiongruppen enthaltenden Vernetzers (Vernetzer 1, Herstellungsbeispiel)

1000 g (4,50 mol) Isophorondiisocyanat (IPDI) wurden bei Raumtemperatur unter trockenem Stickstoff und Rühren nacheinander mit 10 g (1 %) Triisodecylphosphit sowie 20 g (2 %) 4-Dimethylaminopyridin (DMAP) als Katalysator versetzt. Nach 20 h wurde die Reaktionsmischung, die einen NCO-Gehalt von 28,7 %, entsprechend einem Oligomerisierungsgrad von 21,8 % aufwies, ohne vorherige Zugabe eines Katalysatorgiftes mit Hilfe eines Dünnschichtverdampfers bei einer Temperatur von 160°C und einem Druck von 0,3 mbar von flüchtigen Bestandteilen befreit.

Man erhielt ein hellgelbes Uretdionpolyisocyanat mit einem Gehalt an freien NCO-Gruppen von 17,0 %, einem Gehalt an monomerem IPDI von 0,4 % und einer Viskosität von mehr als 200.000 mPas. 337 g 1,4-Butandiol, 108 g 2-Ethylhexanol und 569 g ε-Caprolacton wurden bei Raumtemperatur unter trockenem Stickstoff vermischt, mit 0,3 g Zinn(II)octoat versetzt, 5 h bei 160°C gerührt und anschließend auf Raumtemperatur abgekühlt. Zu dieser Mischung wurden dann 1850 g des vorstehend beschriebenen uretdiongruppenhaltigen Polyisocyanates auf Basis von IPDI, erwärmt auf 80°C innerhalb von 30 min zugegeben. Das Reaktionsgemisch wurde bei einer Temperatur von max. 100°C gerührt bis der NCO-Gehalt des Reaktionsgemisches nach 7 bis 8 h auf einen Wert von 0,8% abgesunken ist. Zum Erstarren wurde das Reaktionsgemisch auf ein Blech gegossen, zerkleinert und anschließend im Dowanol PnB gelöst, sodass eine Lösung mit 60 Gew.-% Festanteil entstand.

### Beispiele 1 bis 4

### Beispiel 1

**Tabelle 1**

| | | Einwaage (g) |
|---|---|---|
| Teil 1 | DOWANOL PnB | 1567 |
| | | |
| Teil 2 | PEROXAN DB | 33 |
| | DOWANOL PnB | 33 |
| | | |
| Teil 3 | METHYLMETHACRYLAT | 1243 |
| | HYDROXYETHYLMETHACRYLAT | 2419 |
| | n-BUTYLMETHACRYLAT | 592 |
| | n-BUTYLACRYLAT | 723 |
| | ISOBORNYLMETHACRYLAT | 1701 |
| | BUTANDIOLMONOACRYLAT | 836 |
| | STYROL | 573 |
| | | |
| Teil 4 | PEROXAN DB | 140 |
| | DOWANOL PnB | 140 |
| | | |
| Teil 5 | BUTANDIOLMONOACRYLAT | 296 |
| | METHYLMETHACRYLAT | 449 |
| | HYDROXYETHYLMETHACRYLAT | 467 |
| | n-BUTYLACRYLAT | 379 |
| | ACRYLSÄURE | 316 |
| | | |
| Teil 6 | PEROXAN DB | 33 |
| | DOWANOL PnB | 60 |
| | | |
| | Gesamtmenge | 12000 |

Teil 1 aus der Tabelle 1 wurde in eine Rührapparatur unter Stickstoff eingewogen und auf 138 °C aufheizt. Danach wurde Teil 2 bei 138 °C in 20 Min. gleichmäßig zudosiert. Anschließend wurde sofort Teil 3 und Teil 4 parallel in 4 Std. 30 Min. bei 138 °C gleichmäßig zudosiert. Nach der Zugabe wurde das Reaktionsgemisch 30 Min. bei 138 °C gehalten. Zum Schluss wurden Teil 5 und Teil 6 parallel in 1 Std. 30 Min. bei 138 °C gleichmäßig zudosiert. Nach der Zugabe wurde das Reaktionsgemisch weiter 1 Std. bei 138 °C gehalten. Nach dem Abkühlen erhielt man eine leicht gelbliche, hoch viskose Polyacrylat-Lösung. 500g dieser Lösung wurden in eine Rührapparatur unter Stickstoff eingewogen und auf 70 °C aufheizt. Nach der Homogenisierung wurden 567g der 60%iger Vernetzer 1 - Lösung in Dowanol PnB zugegeben und die Mischung wurde wieder 30 Min. bei 70°C homogenisiert, gefolgt von Zugabe einer Mischung aus 21,5g Triethanolamin und 4,3g Dimethylethanolamin. Nach einer Nachrührzeit von 30 Min. bei 70°C wurden in die Mischung 463g destilliertes Wasser eingerührt. Nach der Feineinstellung der Viskosität auf ca. 2000 mPas erhielt man eine Dispersion mit folgenden Kenndaten:

| | |
|---|---|
| Festgehalt | 43,7 Gew.-% |
| Säurezahl (100%ig) | 13mg KOH/g |
| OH-Gehalt (100%ig, berechnet) | 2,8 Gew.-% |
| Mittlere Teilchengröße | 230 nm |
| Viskosität | 2030 mPas |
| pH-Wert | 7,5 |

Die Dispersion blieb über 10 Monate bei 23°C stabil.

### Beispiel 2

500g Polyacrylat Lösung aus dem Beispiel 1 wurden in eine Rührapparatur unter Stickstoff eingewogen und auf 70 °C aufheizt. Nach der Homogenisierung wurden 283g der 60%iger Vernetzer 1 - Lösung in Dowanol PnB zugegeben und die Mischung wurde wieder 30 Min. bei 70°C homogenisiert, gefolgt von Zugabe einer Mischung aus 21,5g Triethanolamin und 4,3g Dimethylethanolamin. Nach einer Nachrührzeit von 30 Min. bei 70°C wurden in die Mischung 407g destilliertes Wasser eingerührt. Nach der Feineinstellung der Viskosität auf ca. 2000 mPas erhielt man eine Dispersion mit folgenden Kenndaten:

| | |
|---|---|
| Festgehalt | 41,7 Gew.-% |
| Säurezahl (100%ig) | 16,6 mg KOH/g |
| OH-Gehalt (100%ig, berechnet) | 3,6 Gew.-% |
| Mittlere Teilchengröße | 175 nm |
| Viskosität | 2360 mPas |
| pH-Wert | 7,5 |

Die Dispersion blieb über 10 Monate bei 23°C stabil.

### Beispiel 3

**Tabelle 2**

| | | Einwaage (g) |
|---|---|---|
| Teil 1 | SOLVENT NAPHTA 100 | 900 |
| | BUTYLGLYKOL | 648 |
| | | |
| Teil 2 | PEROXAN DB | 33 |
| | BUTYLGLYKOL | 33 |
| | | |
| Teil 3 | METHYLMETHACRYLAT | 3669 |
| | HYDROXYETHYLMETHACRYLAT | 1816 |
| | n-BUTYLACRYLAT | 2603 |
| | | |
| Teil 4 | PEROXAN DB | 139 |
| | BUTYLGLYKOL | 139 |
| | | |
| Teil 5 | METHYLMETHACRYLAT | 520 |
| | HYDROXYETHYLMETHACRYLAT | 734 |
| | n-BUTYLACRYLAT | 408 |
| | ACRYLSÄURE | 245 |
| | | |
| Teil 6 | PEROXAN DB | 33 |
| | BUTYLGLYKOL | 80 |
| | | |
| | Gesamtmenge | 12000 |

Teil 1 aus der Tabelle 2 wurde in eine Rührapparatur unter Stickstoff eingewogen und auf 138 °C aufheizt. Danach wurde Teil 2 bei 138 °C in 20 Min. gleichmäßig zudosiert. Anschließend wurde sofort Teil 3 und Teil 4 parallel in 4 Std. 30 Min. bei 138 °C gleichmäßig zudosiert. Nach der Zugabe wurde das Reaktionsgemisch 30 Min. bei 138 °C gehalten. Zum Schluss wurden Teil 5 und Teil 6 parallel in 1 Std. 30 Min. bei 138 °C gleichmäßig zudosiert. Nach der Zugabe wurde das Reaktionsgemisch weiter 1 Std. bei 138 °C gehalten. Nach dem Abkühlen erhielt man eine leicht gelbliche, hoch viskose Polyacrylat-Lösung auf 100°C wurde das Reaktionsgemisch abgefüllt.

552g dieser Lösung wurden in eine Ruhrapparatur unter Stickstoff eingewogen und auf 70 °C aufheizt. Nach der Homogenisierung wurden 471g der 60%iger Vernetzer 1 - Lösung in Dowanol PnB zugegeben und die Mischung wurde wieder 30 Min. bei 70°C homogenisiert, gefolgt von Zugabe von 14,6g Dimethylethanolamin. Nach einer Nachrührzeit von 30 Min. bei 70°C wurden in die Mischung 466g destilliertes Wasser eingerührt. Nach der Feineinstellung der Viskosität auf ca. 2000 mPas erhielt man eine stabile Dispersion mit folgenden Kenndaten:

| | |
|---|---|
| Festgehalt | 46,1 Gew.-% |
| Säurezahl (100%ig) | 16,3mg KOH/g |
| OH-Gehalt (100%ig, berechnet) | 2,1 Gew.-% |
| Mittlere Teilchengröße | 225 nm |
| Viskosität | 1110 mPas |
| pH-Wert | 8,2 |

Die Dispersion blieb über 5 Monate bei 23°C stabil.

### Beispiel 4

**Tabelle 3**

| | | Einwaage (g) |
|---|---|---|
| Teil 1 | DOWANOL PnB | 3438 |
| | | |
| Teil 2 | PEROXAN DB | 33 |
| | DOWANOL PnB | 33 |
| | | |
| Teil 3 | STYROL | 570 |
| | METHYLMETHACRYLAT | 1566 |
| | HYDROXYETHYLMETHACRYLAT | 1601 |
| | n-BUTYLACRYLAT | 341 |
| | ISOBORNYLMETHACRYLAT | 1520 |
| | n-BUTYLMETHACRYLAT | 1208 |
| | VEOVA 9 | 1251 |
| | | |
| Teil 4 | PEROXAN DB | 118 |
| | DOWANOL PnB | 321 |
| | | |
| | Gesamtmenge | 12000 |

Teil 1 aus der Tabelle 3 wurde in eine Ruhrapparatur unter Stickstoff eingewogen und auf 148 °C aufheizt. Danach wurde Teil 2 bei 148 °C in 20 Min. gleichmäßig zudosiert. Anschließend wurde sofort Teil 3 und Teil 4 parallel in 6 Std. bei 148 °C gleichmäßig zudosiert. Nach der Zugabe wurde das Reaktionsgemisch 60 Min. bei 148 °C gehalten. Nach dem Abkühlen auf 80°C wurde die Polyacrylat-Lösung abgefüllt.

**Tabelle 4**

| | Rohstoff | Einwaagen |
|---|---|---|
| | | |
| Teil 1: | Polyacrylat -Lösung aus der Tabelle 3 | 1993 |
| | | |
| Teil 2 | PEROXAN DB | 36 |
| | DOWANOL PnB | 36 |
| | | 72 |
| Teil 3 | 2 - ETHYLHEXYLACRYLAT | 377 |
| | HYDROXYETHYLACRYLAT | 1931 |
| | n-BUTYLMETHACRYLAT | 1308 |
| | ISOBORNYLMETHACRYLA T | 2951 |
| | n-BUTYLACRYLAT | 338 |
| | BUT ANDIOLMONOACRYLA T | 555 |
| | | |
| Teil 4 | PEROXAN DB | 129 |
| | DOWANOL PnB | 154 |
| | | |
| Teil 5 | METHYLMETHACRYLAT | 533 |
| | HYDROXYETHYLACRYLAT | 799 |
| | n-BUTYLACRYLAT | 411 |
| | METHACRYLSÄURE | 333 |
| | | |
| Teil 6 | PEROXAN DB | 36 |
| | DOWANOL PnB | 80 |
| | | |
| | Gesamtmenge | 12000 |

Teil 1 aus der Tabelle 4 wurde in eine Rührapparatur unter Stickstoff eingewogen und auf 144 °C aufheizt. Danach wurde Teil 2 bei 144 °C in 20 Min. gleichmäßig zudosiert. Anschließend wurde sofort Teil 3 und Teil 4 parallel in 4 Std. 30 Min. bei 144 °C gleichmäßig zudosiert. Nach der Zugabe wurde das Reaktionsgemisch 5 Min. bei 144 °C gehalten. Zum Schluss wurden Teil 5 und Teil 6 parallel in 1 Std. 30 Min. bei 144 °C gleichmäßig zudosiert. Nach der Zugabe wurde das Reaktionsgemisch erneut 1 Std. bei 144 °C gehalten. Nach dem Abkühlen erhielt man eine leicht gelbliche, hoch viskose Polyacrylat-Lösung.

304g dieser Lösung wurden in eine Ruhrapparatur unter Stickstoff eingewogen und auf 70 °C aufheizt. Nach der Homogenisierung wurden dazu 385g der 60%iger Vernetzer 1 - Lösung in Dowanol PnB zugegeben und die Mischung wurde wieder 30 Min. bei 70°C homogenisiert, gefolgt von Zugabe von 11g Dimethylethanolamin. Nach einer Nachrührzeit von 30 Min. bei 70°C wurden in die Mischung 324 g destilliertes Wasser eingerührt. Nach der Feineinstellung der Viskosität auf ca. 2000 mPas erhielt man eine Dispersion mit folgenden Kenndaten:

| | |
|---|---|
| Festgehalt | 42,6 Gew.-% |
| Säurezahl (100%ig) | 18 mg KOH/g |
| OH-Gehalt (100%ig, berechnet) | 2,5 Gew.-% |
| Mittlere Teilchengröße | 287 nm |
| Viskosität | 2030 mPas |
| pH-Wert | 8,7 |

Die Dispersion blieb über 5 Monate bei 23°C stabil.

### Lacktechnische Prüfungen:

Es wurden Klarlacke aus vorstehenden Beispielen 1 bis 4 hergestellt. (alle Einwaagen in g):

**Tabelle 5. Erfindungsgemäße Beispiele 5 bis 8**

| **Beispiel** | **5** | **6** | **7** | **8** |
|---|---|---|---|---|
| **1** | 10,00 | | | |
| **2** | | 10,00 | | |
| **3** | | | 10,00 | |
| **4** | | | | 10,00 |

Die Dispersionen wurden in einem Speed Mixer bei 2000 U/min 1 Minute homogenisiert auf eine Coil-Blechplatte mit einem Rakel mit einer Schichtdicke von 180 µm (nass) aufgetragen. Die Platten mit den aufgetragenen Nasslacken wurden 5 min bei Raumtemperatur, 30 min bei 180 °C eingebrannt und anschließend 24 Stunden bei Raumtemperatur gelagert. Die gelagerten Filme wurden anwendungstechnisch beurteilt (Tabelle 6).

**Tabelle 6. Lacktechnische Ausprüfung der erfindungsgemäßen Beispielen 5-8**

| **Beispiel** | **5** | **6** | **7** | **8** |
|---|---|---|---|---|
| **Aussehen des Lackes (Sichtprüfung)** | klar, glänzend | klar, glänzend | klar, glänzend | seiden-matt |
| **Schichtdicke (trocken, µ)** | 60 | 50 | 50 | 40 |
| **Pendelhärte (s)** | 188 | 196 | 189 | 204 |
| **Xylolbeständigkeit (5 Minuten)** | 3 | 2 | 3 | 2 |
| **Entionisiertes Wasser (1 Stunde)** | 1 | 0-1 | 0-1 | 0-1 |

Wie aus der Tabelle 6 ersichtlich ist, ergeben die erfindungsgemäßen Uretdion-haltigen Dispersionen harte und beständige Lacke. Aus den erfindungsgemäßen Uretdion-haltigen Dispersionen lassen sich sowohl glänzende als auch seidenmatte Beschichtungen herstellen.

## Patentansprüche

1. Wässrige uretdiongruppenhaltige Zusammensetzungen, umfassend oder bestehend aus,
(A) mindestens einen uretdiongruppenhaltigen Härter, basierend auf aliphatischen, cycloaliphatischen, araliphatischen und/oder aromatischen Polyisocyanaten, welcher keine chemisch gebundenen hydrophilierenden Gruppen enthält;
(B) mindestens ein Polyacrylatcopolymer;
(C) gegebenenfalls Lösemittel; und
(D) gegebenenfalls Hilfs- und Zusatzstoffe;
wobei das Mengenverhältnis der Komponenten (A) und (B) so bemessen ist, dass das molare Verhältnis von den als Uretdion vorliegenden NCO-Gruppen des Härters (A) zu NCOreaktiven Gruppen des Polyacrylatcopolymers (B) 3,0 : 0,5 bis 0,5 : 3,0 beträgt und wobei A und B als physikalische Mischung vorliegen.

2. Zusammensetzung nach Anspruch 1, **dadurch gekennzeichnet, dass** der mindestens eine uretdiongruppenhaltige Härter A durch Umsetzen von monomeren Isocyanaten umfassend oder bestehend aus mindestens einem monomeren Isocyanat ausgewählt aus Tetramethylen-diisocyanat, Cyclohexan-1,3- und 1,4-diisocyanat, Pentamethylendiisocyanat, Hexamethylendiisocyanat (HDI), 1-Isocyanato-3,3,5-trimethyl-5-isocyanatomethylcyclohexan (Isophorondiisocyanat IPDI), Dicyclohexylmethan-2,4'- und/oder 4,4'-diisocyanat, Tetramethylxylylendiisocyanat (TMXDI), Triisocyanatononan, Toluylendiisocyanat (TDI), Diphenylmethan-2,4'-und/oder 4,4'-diisocyanat (MDI), Triphenylmethan-4,4'-diisocyanat oder Naphthylen-1,5-diisocyanat oder Mischungen davon erhalten wurde.

3. Zusammensetzung nach Anspruch 1 oder 2, **dadurch gekennzeichnet, dass** als Einsatzstoffe für den mindestens eine uretdiongruppenhaltigen Härter A hydroxylgruppenhaltige Monomere und/oder Polymere eingesetzt werden.

4. Zusammensetzung nach einem der vorstehenden Ansprüchen, **dadurch gekennzeichnet, dass** der mindestens eine uretdiongruppenhaltige Härter A einen freien NCO-Gehalt von weniger als 5 Gew.-% und einen Gehalt an Uretdiongruppen von 1 bis 18 Gew.-% (berechnet als C₂N₂O₂, Molekulargewicht 84 g/mol) aufweist.

5. Zusammensetzung nach einem der vorstehenden Ansprüchen, **dadurch gekennzeichnet, dass** die wässrige Zusammensetzung eine Säurezahl von 1 bis 100 mg KOH/g aufweist.

6. Zusammensetzung nach einem der vorstehenden Ansprüchen, **dadurch gekennzeichnet, dass** das mindestens eine Polyacrylatcopolymer erhalten wird durch Umsetzen einer Mischung aus radikalisch polymerisierbaren Monomeren (M), umfassend
(M1) Hydroxyl- und Carboxyl-freie (Meth)acrylester mit C1 bis C12 Kohlenwasserstoffresten in der Alkoholeinheit;
(M2) Hydroxyl-funktionelle, radikalisch polymerisierbare Monomere;
(M3) Carboxyl-funktionelle, radikalisch polymerisierbare Monomere;
(M4) gegebenenfalls Vinylester von aliphatischen Carbonsäuren;
(M5) gegebenenfalls mindestens einem cycloaliphatischen Ester von (Meth)acrylsäure und/oder Vinylaromaten.

7. Zusammensetzung nach einem der vorstehenden Ansprüchen, **dadurch gekennzeichnet, dass** das mindestens eine Polyacrylatcopolymer einen OH-Gehalt größer 1 Gew.-% (als OH-Gruppe auf Festgehalt berechnet, Molekulargewicht 17 g / mol) und ein zahlenmittleres Molekulargewicht Mn von 500 bis 20000 g/mol aufweist.

8. Zusammensetzung nach einem der vorstehenden Ansprüche, **dadurch gekennzeichnet, dass** das Lösemittel ausgewählt ist aus Aceton, Methylethylketon, Ethylacetat, Butylacetat, Xylol, Schwerbenzol, Propylenglykolmono-n-butylether, Dipropylenglykoldimethylether, Methoxypropylacetat, dibasischen Estern oder Mischungen davon.

9. Zusammensetzung nach einem der vorstehenden Ansprüche, **dadurch gekennzeichnet, dass** die Hilfs- und Zusatzstoffe ausgewählt sind aus Verlaufsmitteln, Lichtschutzmitteln, Katalysatoren, Füllstoffen und Pigmenten oder Mischungen davon.

10. Zusammensetzung nach einem der vorstehenden Ansprüche, **dadurch gekennzeichnet, dass** die Summe der Gewichts-Anteile von (A), (B) und (D) 30 bis 60 Gew.-%, bezogen auf den Feststoffgehalt der gesamten wässrigen Zusammensetzung, beträgt.

11. Verfahren zur Herstellung einer Polyurethanschicht, umfassend die Schritte
i) Bereitstellen einer wässrigen uretdiongruppenhaltigen Zusammensetzung gemäß einem der Ansprüche 1 bis 10;
ii) Aufbringen der unter i) erhaltenen Mischung auf ein Substrat;
iii) Trocknen der Mischung aus Schritt ii), und
iv) Härten der Mischung aus Schritt iii) unter Wärmezufuhr von 40 °C bis 180 °C für bis zu 180 Minuten.

12. Verfahren nach Anspruch 11, **dadurch gekennzeichnet, dass** die wässrige uretdiongruppenhaltige Zusammensetzung durch Vermischen des uretdiongruppenhaltigen Härters A mit dem mindestens einen Polyacrylatcopolymer B in Abwesenheit von Wasser und anschließender Dispergierung mit Wasser erhalten wurde.

13. Polyurethanschicht, insbesondere Polyurethanfilm, erhältlich durch ein Verfahren nach Anspruch 11 oder 12.

14. Ein Substrat, welches mit der Polyurethanschicht nach Anspruch 13 beschichtet oder verklebt ist.
